Europäisches Patentamt

European Patent Office

Office européen des brevets

(11) Publication number: **0 288 999 B1**

## EUROPEAN PATENT SPECIFICATION

(45) Date of publication of patent specification: **04.03.92**

(51) Int. Cl.⁵: **B25J 9/10**, B25J 19/00, B25J 17/02

(21) Application number: **88106755.7**

(22) Date of filing: **27.04.88**

(54) **Industrial robot.**

(30) Priority: **29.04.87 SE 8701772**

(43) Date of publication of application:
**02.11.88 Bulletin 88/44**

(45) Publication of the grant of the patent:
**04.03.92 Bulletin 92/10**

(84) Designated Contracting States:
**DE FR GB IT**

(56) References cited:
**CH-A- 624 328**
**DE-U- 8 310 054**
**GB-A- 890 456**
**GB-A- 2 135 230**
**US-A- 4 355 469**

(73) Proprietor: **ASEA BROWN BOVERI AB**

**S-721 83 Västeras(SE)**

(72) Inventor: **Andersson, Ake**
**Kaprifolgatan 83**
**S-722 43 Västeras(SE)**
Inventor: **Österberg, Ake**
**Eskilstunavägen 35**
**S-632 39 Eskilstuna(SE)**

(74) Representative: **Boecker, Joachim, Dr.-Ing.**
**Rathenauplatz 2-8**
**W-6000 Frankfurt a.M. 1(DE)**

Rank Xerox (UK) Business Services

## Description

The invention relates to an industrial robot according to the precharacterising part of Claim 1. An industrial robot of this kind is disclosed in GB-A-2 735 230.

An industrial robot normally consists of a base and a rotatable pedestal which is mounted on the base and which, in turn, supports the robot arm. Increasingly higher demands are placed on the speed of action and the precision of positioning of such a robot. Since, in addition, it is also required that the robot should be capable of handling extremely heavy loads, special solutions have to be worked out to achieve a backlash-free mounting of, for example, the pedestal to the robot base, as well as a power transmission, also without backlash, between the drive motor for the pedestal and the latter's drive shaft. Otherwise problems would arise, even with position transducers arranged at suitable locations, when the robot arm with a high acceleration and a high deceleration is moved from one position to another.

To achieve a satisfactory mounting of the pedestal on the base, it is known to use a bearing and to mount on the pedestal a gear unit which is almost free of backlash, the drive shaft of the gear unit being coupled to the drive motor secured to the pedestal.

It is very difficult to bring about complete coincidence between the centre of the output shaft of the gear unit and the centre of the bearing. A difference of up to one or a few millimetres must be counted on. Furthermore, it is not easy to cause the direction of the axis of rotation of the output shaft to become completely parallel to the direction of the axis of rotation of the bearing. There will often be a minor angular deviation between these axes. To keep these deviations small, high precision demands have to be placed on the manufacture of the components involved.

The invention aims at designing an industrial robot which allows to decrease the precision demands on the manufacturing while at the same time the backlash in the power transmission is avoided and the operational precision of the robot is relatively insensitive to the above-mentioned angular deviations.

To achieve this aim the invention suggests an industrial robot according to the introductory part of Claim 1, which is characterized by the features of the characterizing part of Claim 1.

Further developments of the invention are characterized by the features of the additional claims.

According to the invention the backlash in the power transmission is avoided while at the same time, due to the flexibility in other degrees of freedom, it is not necessary to place unreasonably high demands on the alignment of the pedestal and its drive equipment.

The coupling suitably consists of a plate in the form of a hat-shaped membrane, with its brim being fixed to the base and its centre of the crown being fixed to the output shaft of the gear unit. The crown of the hat increases the elasticity of the coupling while at the same time the coupling remains rigid in the direction of rotation. To further increase the flexibility of the coupling, one or more folds can be arranged in the brim, which folds run around the crown.

The invention will now be described in greater detail with reference to the accompanying drawings showing - by way of example - in

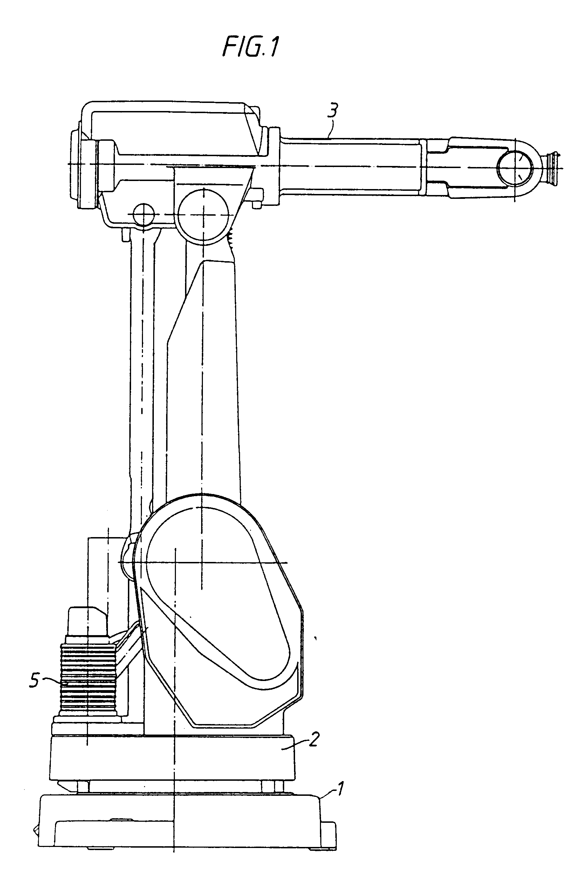

Figure 1
a side view of a robot according to the invention,
Figure 2
a partially broken-away view of the base and the lower part of the pedestal of the robot according to Figure 1,
Figure 3 and 4
an embodiment of the actual membrane coupling.

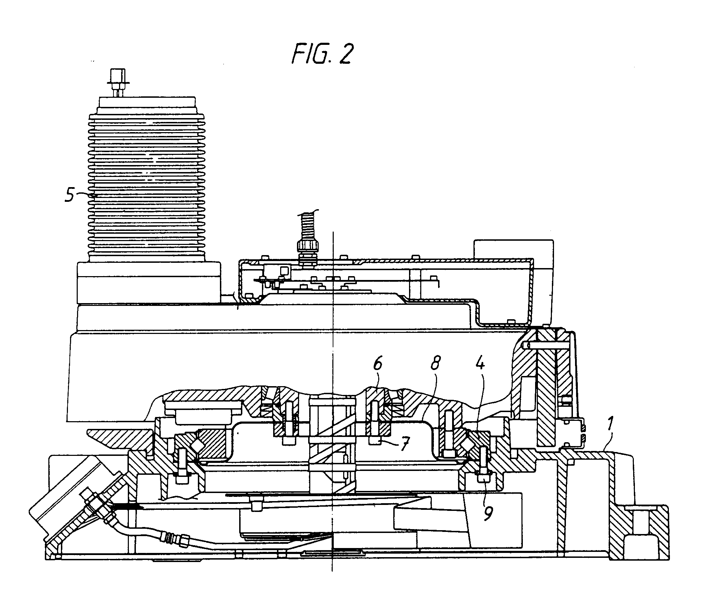

The robot in Figure 1 comprises a base 1 with a pedestal 2 resting on the base 1 and supporting the robot arm 3. Figure 2 shows the lower part of the pedestal 2 rotatably mounted on the base 1 by means of the bearing 4. A motor 5 drives a gear unit mounted in the pedestal 2 but concealed in Figure 2. The gear unit has an output shaft 6 which is fixed by means of bolts 7 to a hat-shaped plate coupling 8. The plate coupling 8, in turn, is connected around its outer edge to the base 1 by means of bolts 9, which at the same time fix the outer rim of the bearing 4. The shaft 6 is hollow thus allowing the passage of cables and hoses through the shaft and an opening in the centre of the plate coupling 8 for the supply of electricity and compressed air to the robot.

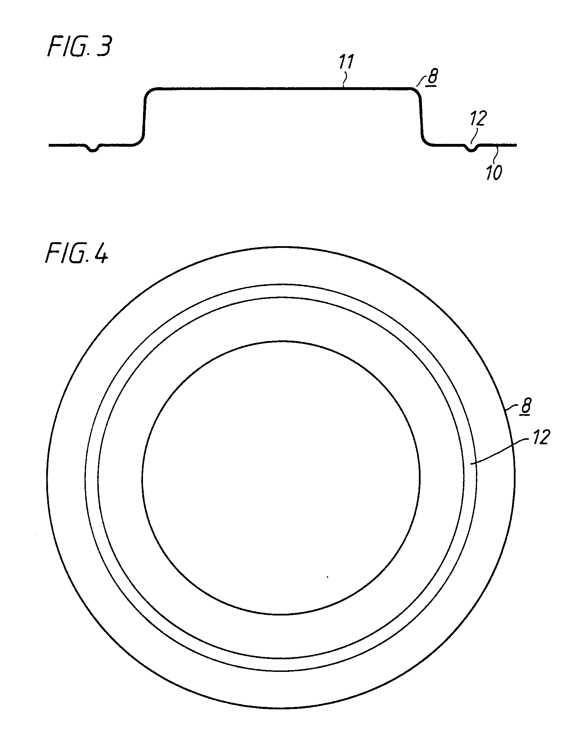

Figures 3 and 4 show the actual plate coupling 8 with its brim 10 and crown 11. A fold 12 is provided in the brim 10.

The robot operates such, that upon rotation of the pedestal 2, the motor 5 and the gear unit accompany the pedestal 2 on its movement around the output shaft 6 of the gear unit, the shaft remaining stationary together with the base 1 to which the shaft 6 is fixed by means of the plate coupling 8.

The plate coupling 8 may be given other membrane-like shapes without a crown but with several circular folds, etc.

## Claims

1. Industrial robot comprising a base (1), a pedestal (2) supporting a robot arm (3) and being rotatable mounted on the base (1) by means of a bearing (4), a gear unit, mounted practically without backlash on the pedestal (2), and a motor, mounted on the pedestal (2) and being connected to the drive shaft of said gear unit, **characterized** in that the output shaft (6) of the gear unit is arranged with its axis of rotation approximately coinciding with the axis of rotation of the bearing (4), and that the output shaft (6) is connected to the base (1) by means of a torsionally rigid but otherwise flexible plate coupling (8) which is flexible in such a way that it is capable of compensating for possible deviations in the longitudinal, lateral and angular relative position between said output shaft (6) of the gear unit and said axis of rotation of the bearing (4).

2. Industrial robot according to claim 1, **characterized** in that the plate coupling is provided with several folds (12).

3. Industrial robot according to claim 1 or 2, **characterized** in that the plate coupling (8) is designed as a round hat-shaped membrane with its brim (10) fixed to the base (1) and its crown (11) fixed with its central portion to the output shaft (6) of the gear unit.

4. Industrial robot according to claim 3, **characterized** in that one or several folds (12), running around the crown of the hat, are provided in the brim (10) of the hat-shaped membrane.

5. Industrial robot according to any of the preceding claims, **characterized** in that said output shaft (6) is hollow and that said flexible plate coupling (8) is provided with a central hole adapted to accommodate supply cables and/or supply hoses extending through said shaft (6) and said flexible plate coupling (8).

## Revendications

1. Robot industriel comprenant une base (1), un piédestal (2) qui supporte un bras de robot (3) et qui est monté de façon tournante sur la base (1) au moyen d'un palier (4), un dispositif à engrenages, monté pratiquement sans jeu sur le piédestal (2), et un moteur qui est monté sur le piédestal (2) et qui est accouplé à l'arbre d'entraînement du dispositif à engrenages, **caractérisé** en ce que l'arbre de sortie (6) du dispositif à engrenages est disposé de façon que son axe de rotation coïncide approximativement avec l'axe de rotation du palier (4), et en ce que l'arbre de sortie (6) est accouplé à la base (1) au moyen d'une structure d'accouplement à plaque (8) rigide en torsion mais par ailleurs flexible, qui est flexible d'une manière telle qu'elle soit capable de compenser des écarts possibles dans la position relative longitudinale, latérale et angulaire entre l'arbre de sortie (6) du dispositif à engrenages et l'axe de rotation du palier (4).

2. Robot industriel selon la revendication 1, **caractérisé** en ce que la structure d'accouplement à plaque comporte plusieurs plis (12).

3. Robot industriel selon la revendication 1 ou 2, **caractérisé** en ce que la structure d'accouplement à plaque (8) est conçue sous la forme d'une membrane circulaire en forme de chapeau, dont le rebord (10) est fixé à la base (1) et dont la calotte (11) est fixée par sa partie centrale à l'arbre de sortie (6) du dispositif à engrenages.

4. Robot industriel selon la revendication 3, **caractérisé** en ce qu'un ou plusieurs plis (12), qui s'étendent autour de la calotte du chapeau, sont formés dans le rebord (10) de la membrane en forme de chapeau.

5. Robot industriel selon l'une quelconque des revendications précédentes, **caractérisé** en ce que l'arbre de sortie (6) est creux, et la structure d'accouplement à plaque flexible (8) comporte un trou central qui est conçu pour permettre le passage de câbles d'alimentation et/ou de tuyaux flexibles d'alimentation qui passent à travers l'arbre (6) et la structure d'accouplement à plaque flexible (8).

## Patentansprüche

1. Industrieroboter mit einem Sockel (1), mit einem Fußteil (2), welches einen Roboterarm (3) trägt und drehbar auf dem Sockel (1) mittels eines Lagers (4) befestigt ist, mit einer Getriebeeinheit, die praktisch ohne Spiel auf dem Fußteil (2) montiert ist, und mit einem Motor, der auf dem Fußteil (2) montiert ist und mit der Antriebswelle der genannten Getriebeeinheit verbunden ist, **dadurch gekennzeichnet,** daß die Ausgangswelle (6) der Getriebeeinheit mit ihrer Drehachse annähernd mit der Drehachse des Lagers (4) zusammenfällt und daß die Ausgangswelle (6) mit dem Sockel (1) über eine in Drehrichtung steife, im übrigen aber derart flexible Plattenkupplung (8) verbunden ist, daß mögliche Abweichungen in der Längsrichtung, in der seitlichen Lage oder in der Winkellage zwischen der Ausgangswelle (6) der Getriebeinheit und der genannten Drehachse des Lagers (4) kompensiert werden können.

2. Industrieroboter nach Anspruch 1, **dadurch gekennzeichnet,** daß die Plattenkupplung mit mehreren Falten (12) versehen ist.

3. Industrieroboter nach einem der Ansprüche 1 oder 2, **dadurch gekennzeichnet,** daß die Plattenkupplung (8) als eine runde hutförmige Membran ausgebildet ist, wobei die Hutkrempe (10) mit dem Sockel (1) verbunden ist und die Hutkrone (11) mit ihrem zentralen Teil mit der Ausgangswelle (6) der Getriebeeinheit verbunden ist.

4. Industrieroboter nach Anspruch 3, **dadurch gekennzeichnet,** daß eine oder mehrere Falten (12), die um die Krone des Hutes herum verlaufen, in der Krempe (10) der hutförmigen Membran angeordnet sind.

5. Industrieroboter nach einem der vorhergehenden Ansprüche, **dadurch gekennzeichnet,** daß die Ausgangswelle (6) hohl ist und daß die genannte flexible Plattenkupplung (8) mit einem zentralen Loch zur Aufnahme von Versorgungskabeln und/oder Versorgungsschläuchen versehen ist, die sich durch die Welle (6) und die genannte flexible Plattenkupplung (8) erstrecken.

FIG.1

FIG. 2

FIG. 3

FIG. 4